# EUROPEAN PATENT APPLICATION

(11) **EP 1 014 611 A2**
(43) Date of publication of application: **28.06.2000**
(21) Application number: 99440111.5
(22) Date of filing: 14.05.1999
(51) Int. Cl.: H04J 3/08

(54) **Method and apparatus for optimizing, in the presence of failure, the availability of low-priority channels in a transmission fiber optic transoceanic MS-SP ring**

(30) Priority: 23.12.1998 IT MI982791
(71) Applicant: ALCATEL, 75008 Paris (FR)
(72) Inventor: Betta, Alessandro, 20063 Cernusco sul Naviglio (Milano) (IT); Villani, Giulio, 66100 Chieti (IT)
(74) Representative: Colombo, Stefano Paolo

(57) **Abstract**

A method and apparatus for optimizing, in the presence of a failure, the availability of low-priority channels in a transmission fiber optic transoceanic MS-SP The method according to the present invention provides for selecting which of the low-priority channels can be maintained and which, on the contrary, are to be pre-empted for the benefit of the high-priority traffic. Advantageously, according to the present invention, all the traffic management operations are carried out simultaneously with the high-priority traffic switching.

## Description

The present invention relates to the field of fiber optic transmission and in particular the field of fiber optic transoceanic MS-SP ring communication networks. Still more in particular, it is concerned with a method of optimizing the availability of the low-priority channels in a transmission fiber optic transoceanic MS-SP ring.

In present telecommunication networks it has been becoming extremely important to have the possibility of automatically overcoming the failures possibly occurring in the networks themselves by optimizing the installed traffic restore. Such a need is of course much more felt in transoceanic rings wherein the so called "path", i.e. the bi-directional interconnection between two nodes of the transoceanic ring or between a node of the transoceanic ring and a node of another ring adjacent thereto, is generally very long, on the order of thousands kilometers. In these types of rings, still because of the very long distances at stake, the time necessary to repair the failure can be very long and therefore the occurrence of further failures during these long time intervals can not be excluded.

Ring topology with MS-SP ring protocol provides the subdivision of the available bandwidth into two parts: the channels dedicated to normal traffic (high-priority, or HP, channels) and the channels dedicated to Extra Traffic (low-priority, or LP, channels). Normal traffic is constituted by valuable paths that are protected from the possible occurrence of failures substituting for the Extra Traffic. Extra Traffic is constituted by less important paths that, in the presence of a failure, may be pre-empted to carry normal traffic.

Differently from terrestrial MS-SP ring protocol, the transoceanic application provides for a ring switching mechanism that does not occupy the overall correspondent protection bandwidth. Hence this protection mechanism permits of maintaining part of the Extra Traffic when the ring is subjected to a failure; however this does not occur instantaneously but only after a certain time interval during which the LP traffic is lost.

The above problems have been faced only incidentally in the ITU-T Recommendation G.841 that merely recommends the use of the existing protocol for terrestrial application and the increase of the switching action at all the ring nodes. Hence, in practice, as in conventional rings, it is provided that all the extra traffic is pre-empted during switching operations and only in a successive time such pre-empted extra traffic can be re-established on the protection channels not used to restore the normal traffic.

It is the main object of the present invention to provide a method of selectively switching the low-priority connections (LP connections) and carry out the switching only over those LP channels really necessary for temporarily providing high-priority traffic (HP traffic) in case of failure. In other words, the main object of the present invention is to maximize the number of LP paths that can be maintained, hence to nullify the time during which the LP paths to be maintained are temporarily lost.

A further object of the present invention is to avoid misconnections (even though temporary) during switching and restore operations.

These and other objects are achieved by a method having the features set forth in the independent claim 1 which is intended to be an integral part of the present description; further advantageous features of the method are set forth in the dependent claims, which are to be considered as an integral part of the present description, too.

Contrary to what is suggested by the aforesaid Recommendation, the extra traffic not involved in the switching/restore procedure is never lost, to the advantage of the overall performances of the transmission system. The LP paths over which the switching does not occur are left in their time slots and are not subjected to any action.

The invention will result in being clear after having read the following detailed description given by way of an illustrative and non limiting example, wherein the various figures show:
- Fig. 1 shows a transoceanic ring with protection fiber and working fiber where a failure interrupting the original HP path occurs and thus the HP traffic must be re-routed over the protection channel;
- Fig. 2 illustrates the first phase of the ring switching mechanism;
- Fig. 3 illustrates the second phase of the ring switching mechanism;
- Fig. 4 illustrates the various phases of the ring restoring mechanism;
- Fig. 5 shows the subdivision of the main functional blocks of the equipment for implementing the method in accordance with the present invention; and
- Figs. 6a-6d show possible multiple ring failure conditions.

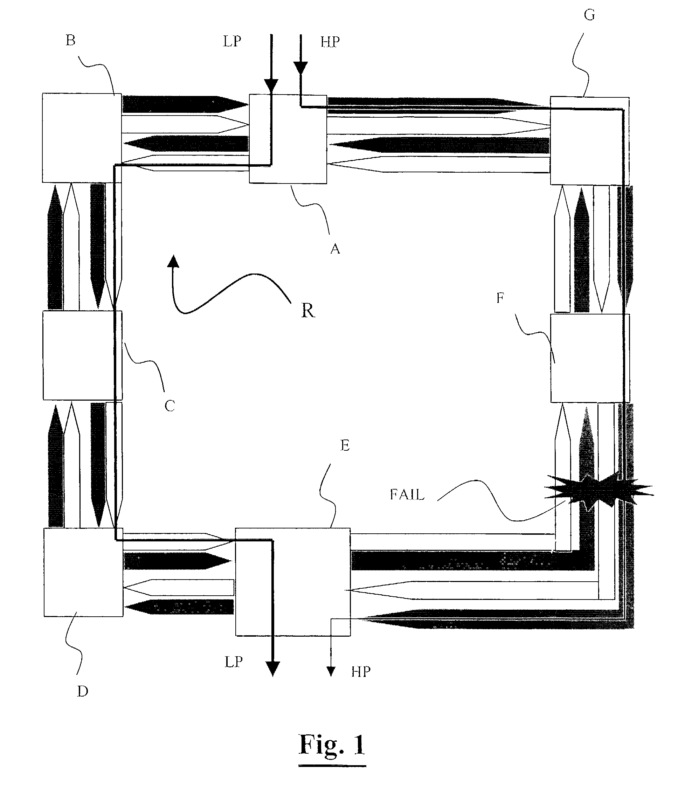

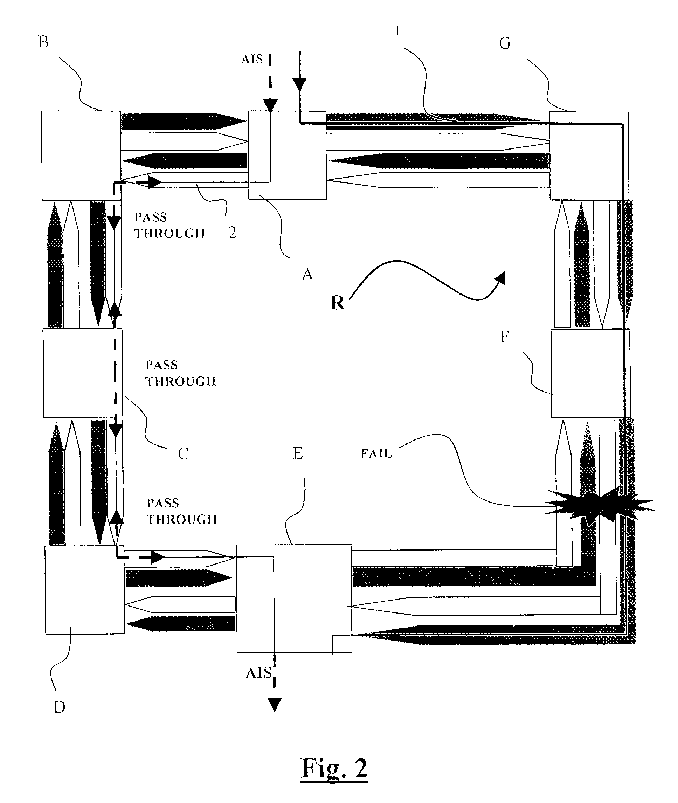

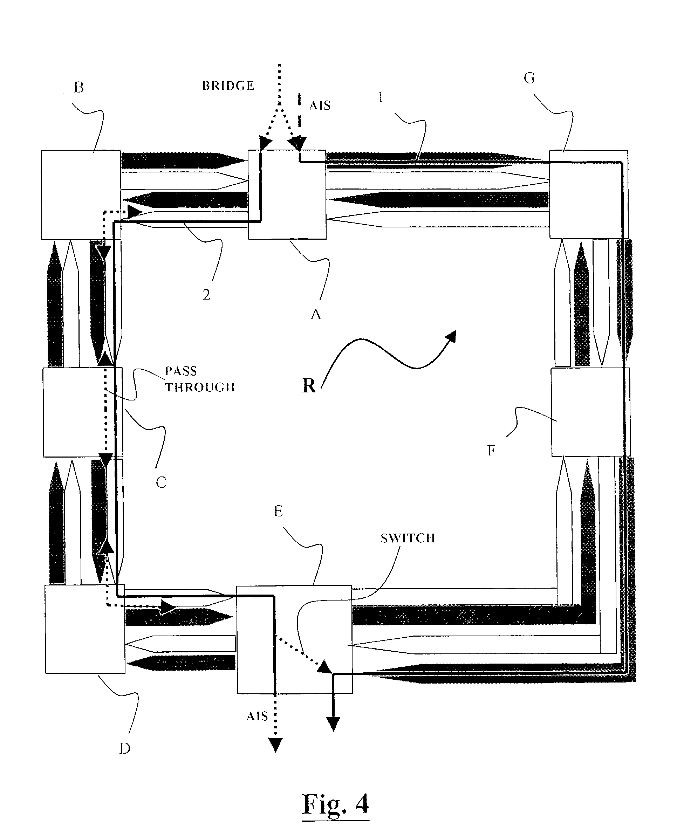

Naturally, like reference characters (numerals, letters or abbreviations) have been used throughout the figures to designate like parts or functionally equivalent parts. Conventionally, in the transoceanic MS-SP ring illustrated in the Figs. 1 to 4, the working channels or fibers (HP) are those indicated by gray arrows, the protection channels or fibers (LP) are those indicated by white arrows. A hatching with longer dashes indicates an insertion or addition step (e.g. in Fig. 2, an AIS is inserted at node A and a pass-through is executed at nodes B, C and D), while a hatching with shorter dashes indicates a deletion step (with reference e.g. to Fig. 4, pass-through is removed at the intermediate nodes, switching is removed at node E, etc.).

The method in accordance with the present invention provides that all nodes of the transoceanic ring (R) have HP traffic maps. In this manner, during the ring switching, HP traffic and LP traffic are analyzed and, depending on the failure location, each ring node (the one F adjacent to the failure, and the intermediate ones A, B...) knows if the HP and LP traffic inserted thereinto or extracted therefrom is affected by the failure. As far as the HP traffic is concerned, there is the need to determine whether the path is affected by failures and therefore must be re-routed on protection channels. Similarly, as far as the LP traffic is concerned, there is the need to determine whether the path can be maintained or it will be lost because occupied by HP traffic.

For a good operation, the switching and restoring mechanisms provide for a series of operations (bridge, switching, AIS forcing) carried out on several nodes of the ring in a synchronized way in order to avoid temporary misconnections on the HP and LP connections.

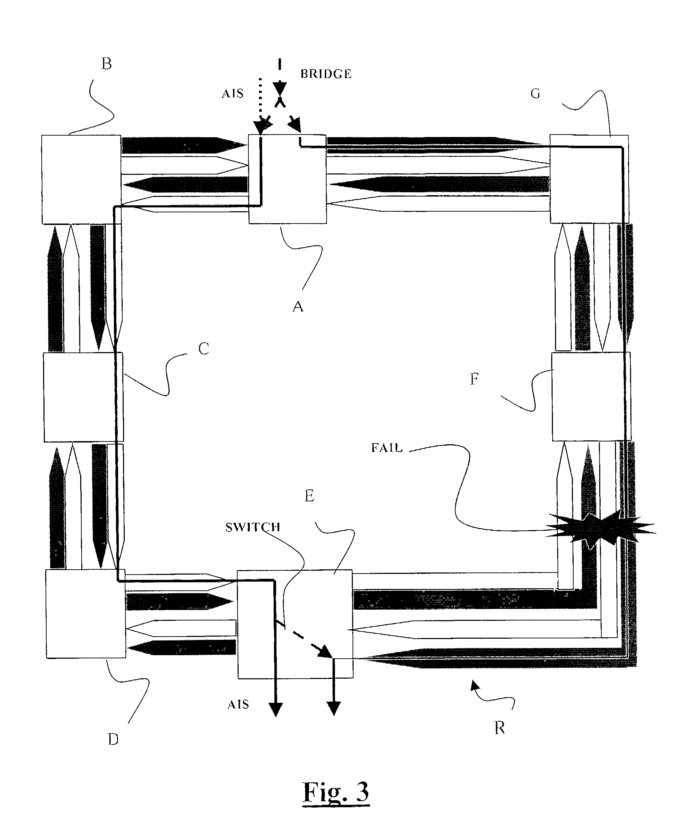

The ring switching mechanism (RSM) will be at first taken into account with reference to Fig. 2 (first phase) and Fig. 3 (second phase).

The switching of a HP path, in a transoceanic application by means of the method according to the present invention, consists in dynamically building a new path on a portion of the ring by using the corresponding time slot of the protection channels. This must be done without causing any misconnection on the lost LP paths occupying the same channels and on the HP connection itself in reconstruction phase. The basic ring protection involves all nodes in two sequentially distinct phases: a first phase (I) of building the new HP path by using the protection channels, and of pre-empting such LP paths; and a second phase (II) of restoring the HP path. In order to avoid misconnections, it is provided that a node can carry out the second phase only if all nodes have completed the first phase. This happens when a signaling mechanism between the ring nodes exists (APS protocol provided by the aforesaid Recommendation) and the signaling has passed through all nodes (a node should receive a response signaling from the other node adjacent to the failure).

If the signaling evolves from the nodes closer to the failure toward the farther nodes following the rebuilt HP path from the insertion point (node A) to the drop point (node E), the above phases I and II of the RSM are constituted by the following steps, respectively:

### RSM Phase I

- I.1 ):at the HP path insertion node A, AIS (Alarm Indication Signal) forcing on the corresponding time slot of the protection channel in the direction that will be followed by the new HP path (in this way, if the time slot in question is not available but it is carrying an LP path, it sees the AIS and will be pre-empted);
- I.2):at all the intermediate nodes (B-D) of the new HP path, executing a pass-through connection (i.e. leaving traffic pass in a transparent way), to interconnect the new HP path (by this operation it may happen that the AIS forced on the insertion node arrives at the other LP paths to be pre-empted); and
- I.3):at drop termination node E of all the LP paths to be pre-empted, carrying out a squelching operation (equivalent to AIS forcing toward the tributary channel).

### RSM Phase II

After that all the drop termination nodes of the pre-empted paths have inserted an AIS it is possible to use the protection time slots for carrying the HP path. It is anyway to be noted that all the LP traffic management operations are carried out substantially simultaneously with the HP traffic switching.
- II.1): at HP path insertion node A, carrying out a bridge operation and then removing the previously inserted AIS (if on the corresponding drop node E the switching operation was already executed - step II.2 -, the HP path would be restored); and
- II.2): at HP path drop node E, carrying out a switching operation (if the bridge operation was not yet executed at the corresponding insertion node A, the connection would receive the AIS forced by the insertion node itself. When the bridge operation has been carried out, the HP path is restored).
   If the signaling among the ring nodes is not sequential along the rebuilt HP path, for instance in the event of multiple ring failures, it is not assured that the new HP path is built starting from the insertion node up to the drop node (steps I.1 and I.2 are no longer temporally successive): the pass-through operation carried out at intermediate nodes could in fact occur before the AIS forcing action carried out at the insertion node or the squelching carried out at the drop node. Thus a pass-through operation could interconnect two LP paths without the presence of AIS on the flow, hence resulting in a temporary misconnection on a LP path.
   Therefore, in order to avoid misconnections in the presence of multiple failures, the pass-through operation at intermediate nodes should be preceded by an AIS forcing action on the transmission side. In this case, step 1.2 for all intermediate nodes (B-D), should be modified as follows:
   - I.2'): executing an AIS forcing action on the corresponding protection time slot at the transmission side and then executing a pass-through connection to interconnect the new HP path.
   Accordingly, a new step (II.3) must be added to steps II.1 and II.2 as follows:
- II.3): at the intermediate nodes of the new HP path, removing the previously inserted AIS (this operation is carried out to get free the new HP path, thus allowing the signal flow).

Having fully described the switching mechanism of the ring R, the relating ring restoring mechanism (RRM) now will be described.

The restore of a HP path in a transoceanic application by means of the method according to the present invention consists in the reconnection of the original HP path and in the re-building with restoring of the previously pre-empted LP paths. This must be done, obviously, without causing any misconnection on the HP path and on the restored LP paths. The basic principle of ring restoring mechanism involves the various ring nodes in three sequentially distinct phases (see Fig. 4):
III): reconnection of the HP path on the working channels;
IV): deletion of the HP path on the protection channels and rebuilding of the original LP paths; and
V): restoring of LP paths.

In order to assure a correct operation, once more a node may carry out the operations associated with one phase only if all the ring nodes have already completed the operations of the previous phase. This occurs when a signaling mechanism exists among the ring nodes (APS protocol mentioned above) and a signaling crosses all nodes (a node receives the own transmitted signaling from the other side). As an alternative, the operations of a phase can be tied to a timer whose duration must be sufficient to guarantee that the signaling has reached all nodes.

More in detail, the above phases I, II and III of RRM provide for:
RRM phase III
   at HP path drop node E, carrying out a removal-of-the-switching operation by reusing the provisioned HP path received on the working channels (in this manner, the HP path is reconstituted. Restored HP path is disconnected and the protection channels can be reused to carry LP paths);
RRM phase IV
   at HP path insertion node A, carrying out a removal-of-the-bridge operation and, at intermediate nodes (B-D), a removal-of-the-pass-through operation (in both cases the operations consist in reconnecting on the protection channels the provisioned LP connection on the node (insertion, pass-through or not equipped). The provisioned LP paths are re-built from the insertion node A up to the drop node E); and
RRM phase V
   at LP path drop node E, removing the squelching action (AIS unforced on tributary side). After such a phase the LP paths are completely restored.

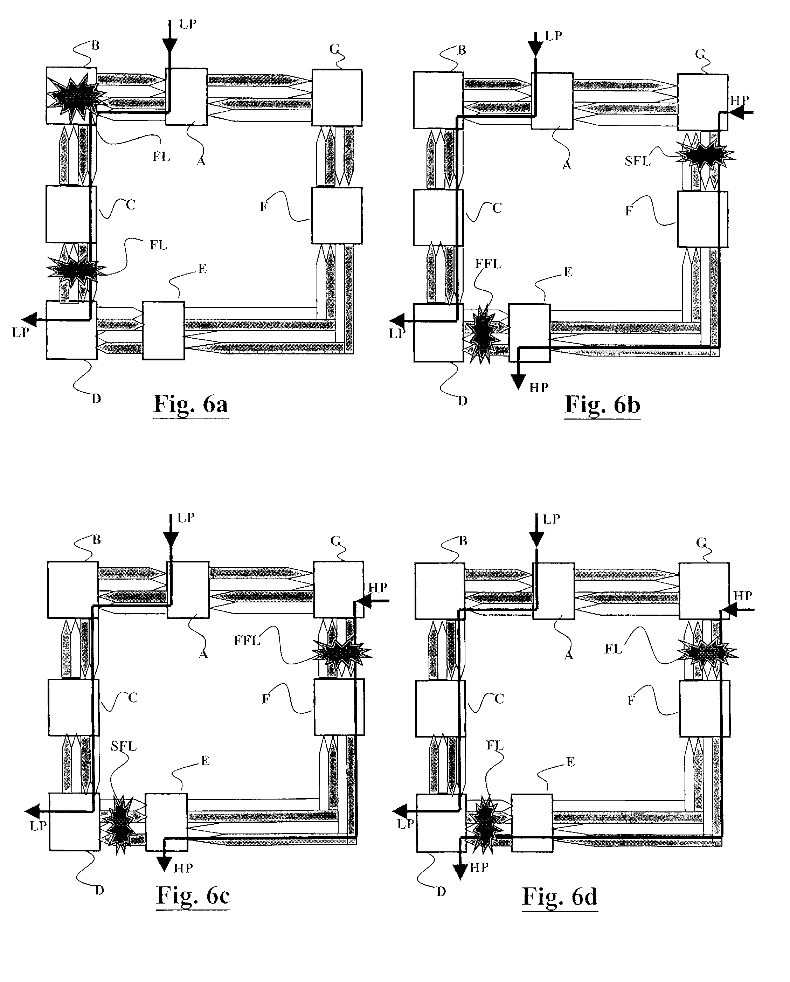

The case (shown in Figures 6a-6d) of multiple failures in the ring R will now be taken into consideration. In transoceanic application multiple ring failures do not split the ring into multiple subrings as occurs in non-transoceanic application but the ring will be segmented into a set of linear insert/drop chains which are separated by cable failures.

On a ring involved in ring protection for one or more ring failures, the occurrence of another ring failure always determines the loss of some other HP traffic: on one end the HP paths affected by a new failure that cannot be restored because also the other way on the ring is interrupted for the presence of other failures; and on the other end the restored HP paths affected by the previous failures for which the restored path now results interrupted by new failure. Traffic which is in this condition is lost because both the two possible ways travelling the ring are blocked.

So it is useless to restore in the first case and to maintain HP restoring on protection channels in the second case. For the last ones getting free the protection channels, some provisioned LP traffic not more involved by failures may be again available.

In this condition the LP traffic may be subjected to one of the following situations:
- LP path is affected by one or more failures FL (Fig. 6a);
- LP path is not pre-empted since, due to a first failure FFL (not affecting the HP path) and a second failure SFL, it is not possible to use that LP path for HP traffic (Fig. 6b);
- LP path, which was pre-empted for HP traffic after the first failure FFL, is restored for LP traffic after the occurring of a second failure SFL (Fig. 6c); or
- LP path is used for switching the remaining HP traffic affected by two failures FL (Fig. 6d).

In order to know which are the LP paths not interrupted by the failures it is necessary to elaborate reduced LP traffic maps of the ring. In order to avoid heavy processing overhead of LP traffic maps and to perform uniform switching operations during appearance and clearing of ring failure, the selected options are the following:
- maintaining only the restored HP paths which are not interrupted by the failures; or
- restoring all the provisioned LP paths on the protection channels no more used for HP restoring independently from the effective reconstitution of the path (present failures interrupt part of the LP connections).

In this manner, the non interrupted LP paths are again available; among the remaining interrupted LP paths some of them will again be re-connected automatically as soon as a failure clears.

On a ring involved in ring protection for two or more ring failures, the clearing of any ring failure determines the capability to re-obtain some other HP traffic: on one end the HP paths no more directly affected by the cleared failure; on the other end the HP paths affected by the remaining failures for which the restored HP path on protection channels is no more interrupted.

In case of cleared failure, the situation on the ring could be:
- some restored HP paths on protection channels are maintained because the provisioned HP path is surely still affected by remaining failures (with multiple ring failures a restored HP path implies that the provisioned HP path crosses all present ring failures);
- some provisioned HP paths no more affected by failures are re-connected without any switching operation (previously, during appearance of a ring failure, corresponding provisioned HP path was restored);
- some provisioned HP paths still affected by remaining failures are restored on protection channels (this occurs only for the paths which have restored HP path on protection channels no more interrupted on the ring);
- provisioned LP paths no more affected by failures and not pre-empted for new HP restoring are re-connected without any switching operation (previously during appearance of ring failure all the LP paths not involved in ring switching was re-constituted).

With one or more ring failures already present on the ring, another ring failure causes a partial ring restoring operation involving the HP paths that can no more be restored via protection channels on the other way.

With two or more ring failures occurred on the ring, the clearing of a ring failure causes a partial ring switching operation involving the HP paths for which the restored path on protection channels is no more interrupted.

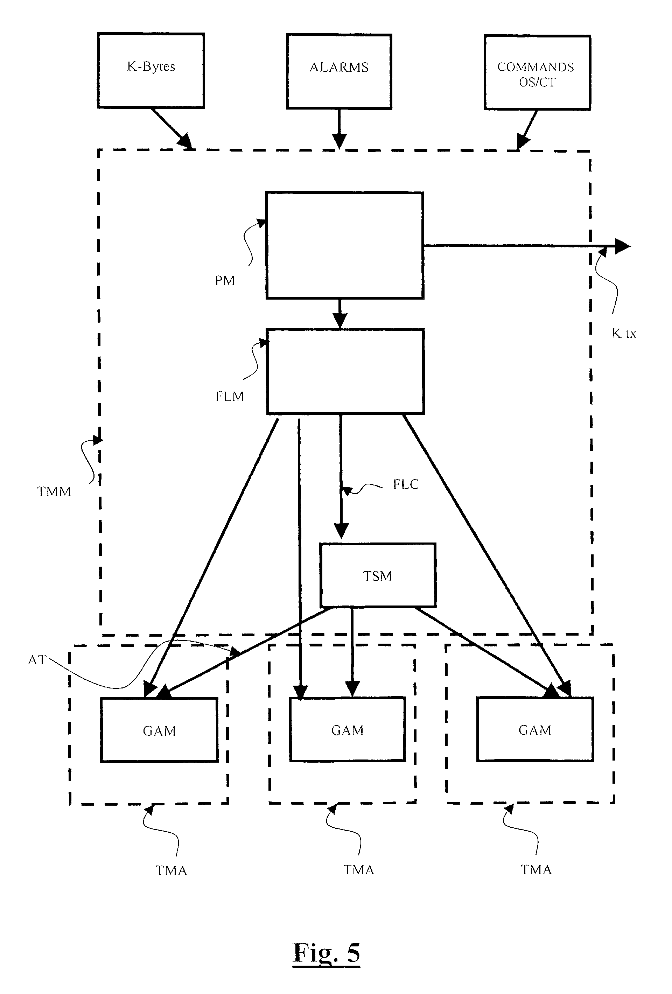

Fig. 5 illustrates the subsystem of a transoceanic MS-SP ring protection mechanism which manages a network element with the method in accordance with the present invention. The function is realized through a transoceanic MS-SP ring manager (TMM, the active part of the mechanism) and, depending on the architecture of the network element (NE), one or more distributed transoceanic MS-SP ring actuators (TMA) located at each node of the ring, with said actuators forming the passive part, which carry out the operations upon command from the manager TMM. Still in Fig. 5, PM designates a block managing a transoceanic MS-SP ring protocol e.g. a 4-fiber ring. Such block determines the status of the node in relation to the other ring nodes by processing the k-bytes received from both sides of the equipment, possible alarm conditions of the line section terminations and possibly the commands (which can be also simulations) received from an Operational System (OS) or, as an alternative, from a standard remote Craft Terminal (CT). Depending on the manner in which it evolves, it determines the k-bytes to be transmitted for the other nodes. The protocol machine block (PM) of a node, in turn, sends also k-bytes to the other ring nodes (Kₜₓ).

Block FLM (Fig. 5) is the main block of the above-mentioned transoceanic manager which allows the realization of the method in accordance with the present invention: it receives the high-level events from block PM and decides which action is to be taken on the information flows in order to obtain the protection; moreover, by analyzing the source and destination node identifiers on the received k-bytes, block FLM is capable of determining the failure location in the ring. In other words, block FLM generates data for the transoceanic actuators, concerning the position of failure and commands to undertake. TMM further comprises block TSM. Block TSM, that processes data concerning the position of the failures, individuates which time-slots are involved in a particular switching operation. It receives data from block FLM and, in turn, sends the AU4 tables to a block, designated as GAM, which is substantially the transoceanic MS-SP ring actuator (TMA).

Block GAM, which processes data concerning commands to be given, carries out the switching operations directly scanned by block FLM only on time slot signaled by TSM by acting directly on the ASICs (otherwise called Gate Arrays).

Block FLM comprises two main routines, the first one called *Fault_Locator* and the second one called *Delta_Bs.* The first routine receives the signaling of the MS-SP ring k-bytes, processes these data to understand the location of failure and communicates this information to TSM. The second routine receives events from PM, processes these data to individuate the steps of the protection mechanism and communicates to GAM the operations to be carried out.

The *Fault_locator* routine, by processing input data such as "k-bytes signaling", "Local Command to NE" and "Local Fail to NE", and, according to the situation, it generates *FAULT LOCATION* information for TSM task. The node failure and/or segmentation is signaled by two successive ring failures on adjacent nodes.

The FLM algorithm executes the following steps: i) it reads the source network element from K_bytes incoming from East side of the NE, thus individuating the last reachable network element towards East side; ii) it reads source network element from K_bytes incoming from West side of the NE, individuating the last reachable NE towards West side; iii) it considers the local Fail and Commands; iv) it determines one of the following situations: NO FAIL, SINGLE FAIL, NODE FAIL, and SEGMENTATION RING and v) it stores the situation in a table.

As to the *Delta_BS* routine, it substantially receives as input data from the protocol machine PM the status corresponding to phases I, II, III, IV and V on all the ring nodes, on the nodes adjacent to the failure or on the intermediate nodes only. The algorithm elaborates the above data and generates towards GAM the following operations to be executed: a) AIS forcing to pre-empt LP path; b) AIS temporary on building restored HP path; c) passthrough connection on building restored HP path; d) bridge operation execution; and e) switch operation execution.

The possible combinations in case of a single ring failure are the followings (e.g., "+ d" means "execution of a bridge connection", "- d" means "removal of bridge connection"):
RSM phase I (operations + a + b + c), RSM phase II.1 (operations + d - b), RSM phase II.2 (operation + e), RRM phase III (operation - e), RRM phase IV (operations - d, -c, -b), RRM phase V (operation - a).

The possible combinations in case of multiple ring failures are:
RSM phase I (operations + a + b + c), RSM phases II.1 & II.2 (operations +d + e - b), RRM phase III (-e -d - c + b) and RRM phases IV & V (- b - a).

Similarly to block FLM, also block TSM comprises two routines. The first block TSM routine provides and pre-elaborates data necessary for the further processing of traffic maps. Essentially, from the MP and LP traffic maps, it builds internal structure data which are more suitable for algorithm processing.

The second routine of block TSM constitutes the real path restoring algorithm. It is called whenever a change of fault location information occurs both for occurring or clearing of a ring failure. It processes the traffic maps according to the position of the failure in order to obtain: i) the restored HP paths to be built on protection channels; ii) the AIS DROP table data, by comparing the built HP paths with the LP traffic map; and iii) the AIS TRANSMISSION, PASS-THROUGH, BRIDGE, SWITCH tables data, by analyzing the built HP paths.

The above operations are executed sequentially twice: once for clockwise path direction and the other one for counter-clockwise path direction. Each elaboration loads one of the two table sides: WEST side or EAST side.

The input data are substantially the node identifier, the ring map, the HP traffic map (clockwise and counter-clockwise direction) and the LP traffic map on current node (clockwise and counter-clockwise direction).

Via the routine called during every provisioning change, TSM pre-processes HP traffic maps as to obtain the list of all the paths present in the ring expressed in terms of source and destination node identifiers according to clockwise and counter-clockwise directions. Receiving the information of the failed span, TSM algorithm executes the following basic steps: storing the failure; individuating the paths affected by the failure (at maximum one for every AU4 time slot) and, for each affected path, constructing and storing the corresponding protected path. A protected path has as source and destination points the same nodes of the correspondent provisioned HP path and as pass-through points all the other nodes not carrying provisioned HP path. Thus TSM builds two "protected" maps: a counter-clockwise protected map corresponds to clockwise provisioned paths; a clockwise protected map corresponds to counter-clockwise provisioned paths. These basic operations are executed whenever occurs the first ring failure.

For the second and further failures TSM, analyzing now the current protected map, executes the following actions: storage of failure; individuation of the protected paths affected by the failure; construction and storage of the new two protected maps eliminating from the previous ones the paths that result interrupted by the occurrence of the new failure and keeping the other ones.

In case of clearing of a ring failure, TSM executes the following actions: clearing of the failure and updating of remaining failure list; construction and storage of the new protected maps obtained starting from the initial provisioned HP traffic map and executing the algorithm more time in cascade. TSM recursively executes the basic algorithm for a number of steps coincident with the number of remaining failures giving to it one a time the stored failures in a unimportant sequence.

TSM furnishes on five output tables the results of processing. The output tables are organized one for each basic ring switching operation. They are: AIS DROP, AIS TRANSMISSION, PASS-THROUGH, BRIDGE and SWITCH. The protected maps represent the basis from which are extracted data for the construction of TSM output tables.

AIS_DROP, PASS-THROUGH, BRIDGE, SWITCH tables are loaded in a static way analyzing current protected maps, AIS_TRANSMISSION table is loaded in a dynamic way obtaining data from the comparison of the current protected map and the protected map of the previous step.

In view of the above description, it is clear that the method according to the present invention is capable of optimizing the availability of low-priority channels in a fiber optic transoceanic MS-SP ring. In other words, it is able to automatically and substantially without any time delay, re-route the HP path on LP channels should a failure occur, while maintaining the LP channels which do not need to be dropped. In the event of a plurality of failures, if an HP path could not be established even using the protection fiber, the LP channels would be left unchanged.

It is evident to a person skilled in the art, in view of the above description, that several modifications, adaptations and replacements can be made, with all of them being understood as falling within the scope of the following claims.

## Claims

1. Method of optimizing, in the presence of failure, the availability of low-priority channels in a fiber optic transoceanic MS-SP ring, said ring comprising high-priority fibers or channels and low-priority fibers or channels, high-priority paths and low-priority paths being respectively provided along said channels, a source or traffic insertion node, a destination or traffic drop node and one or more intermediate nodes being provided for each path, said method comprising the step of
determining the status of a node in relation to the other ring nodes by processing the k-bytes received from at least one side of the ring, and/or possible alarm conditions and/or possible commands and, in case of failure along the high-priority path, the phases of:
I) building a new high-priority path by using the low-priority channels and pre-empting said low-priority channels; and
II) restoring the high-priority path,
wherein only the low-priority channels strictly necessary for building the new high-priority path are used, while those which do not need to be pre-empted are maintained nullifying the time during which the low priority paths to be maintained are temporarily lost.

2. Method according to claim 1, characterized in that phase I comprises the steps of: I.1) forcing an alarm indication signal (AIS) at the high-priority path insertion node on the corresponding path channel time slot in the direction which will be followed by the new high-priority path; 1.2) carrying out a pass-through to interconnect the new path, at all intermediate nodes of the new high-priority path; and 1.3) carrying out a squelching operation at the terminal drop node.

3. Method according to claim 1 or 2, characterized in that said phase II) comprises the steps of: 11.1) carrying out a bridge operation at the high-priority path insertion node and removing the previously inserted alarm indication signal; and 11.2) carrying out a switching operation at high-priority path drop node.

4. Method according to claim 1, 2 or 3 wherein the choice of the low-priority path to be maintained is carried out by processing data, such as the contents of the received k-bytes, and high-priority traffic maps provided at each ring node to establish the exact location of the failure and successively, according to the failure location, by comparing such data with a table indicating, for each failure, which low-priority channel must be eliminated.

5. Method according to any of the preceding claims, characterized in that phases I and II are followed by the phases of:
III) re-connecting the high-priority path on the working channels;
IV) deleting the high-priority path on the protection channels and re-building the provisioned high-priority paths; and
V) restoring the high-priority paths.

6. Device for optimizing the availability of low-priority channels in a fiber optic transoceanic MS-SP ring, characterized in that it comprises means (TMM) for managing the transoceanic MS-SP ring and one or more distributed actuators (TMA) which carry out the operations upon command from said management means (TMM), said management means (TMM) in turn comprising protocol management means (PM) sending high-level events to a failure management block (FLM) and time slot management means (TSM).

7. Device according to claim 6, characterized in that said failure management means send commands to said actuators means (TMA).

8. Device according to claim 6 or 7, characterized in that said time slot management means send AU4 tables to the actuator means (TMA).

9. Device according to any of claims 6 to 8, characterized in that said protocol management block (PM) determines the status of a node in relation to the other nodes of the ring by processing the k-bytes received from at least one side of the ring, and/or possible alarm conditions and/or possible commands/simulations.
